# FASCICULE DE BREVET EUROPEEN

(11) **EP 1 718 172 B1**
(45) Date de publication et mention de la délivrance du brevet: **15.08.2007**
(21) Numéro de dépôt: 05730853.8
(22) Date de dépôt: 23.02.2005
(51) Int. Cl.: A23N 7/04

(54) **PROCEDE ET MACHINE POUR CONDITIONNER EN BALLES DES PLANTES FIBREUSES, NOTAMMENT DU LIN, DU CHANVRE ET SU SISAL**
VERFAHREN UND MASCHINE FÜR DIE BILDUNG VON RUNDBALLEN VON FASERPFLANZEN, INSBESONDERE LEIN, HANF UND SISAL
METHOD AND MACHINE FOR PACKING FIBROUS PLANTS INTO BALLS, ESPECIALLY COMMON FLAX, HEMP PLANT AND SISAL

(30) Priorité: 23.02.2004 FR 0401757; 24.09.2004 FR 0410125
(43) Date de publication de la demande: 08.11.2006
(73) Titulaire: Dehondt, Guy, 76170 Auberville La Campagne (FR)
(72) Inventeur: Dehondt, Guy, 76170 Auberville La Campagne (FR)
(74) Mandataire: Lemoine, Robert
(86) Numéro de dépôt international: PCT/FR2005/000424
(87) Numéro de publication internationale: WO 2005/082175

(56) Documents cités:
- DE-C- 342 443
- FR-A- 1 322 981
- US-A- 2 443 296

## Description

La présente invention concerne un procédé selon la revendication 1 pour conditionner en balles des plantes fibreuses, notamment du lin, du chanvre ou du sisal, disposées en andain sur le sol et rouies au moins partiellement, comprenant les étapes consistant à ramasser et à enrouler les plantes rouies au moins partiellement.

Les plantes fibreuses à fibres longues telles que le lin textile sont mises en balles après rouissage sur le sol, puis transférées dans des sites de transformation dans lesquels elles sont soumises à des opérations de teillage et de peignage conventionnelles.

Leur enroulement est actuellement effectué alors qu'elles sont entières et comportent donc leur pied et leur tête.

Les procédures actuelles de traitement des plantes à fibres longues ne donnent toutefois pas pleinement satisfaction. Elles exigent en effet la réalisation de nombreuses opérations de manutention entre la mise en balles et les opérations exécutées dans les sites de transformation. Une solution à ces inconvénients est présentée dans le document FR-A-1 322 981.

Elles entraînent en outre une perte d'une quantité non négligeable de graines, cette perte étant due à des parasites apparaissant lors du rouissage sur le sol ou résultant des nombreuses opérations de manutention précédant le teillage et le peignage.

La présente invention se propose d'apporter une solution aux problèmes mentionnés ci-dessus et, pour ce faire, elle a pour objet un procédé pour conditionner en balles des plantes fibreuses, notamment du lin, du chanvre ou du sisal, disposées en andain sur le sol et rouies au moins partiellement, ce procédé comprenant les étapes consistant à ramasser et à enrouler les plantes rouies au moins partiellement, et étant caractérisé en ce que les étapes de ramassage et d'enroulement sont réalisées sur des plantes fibreuses dont les têtes et les pieds ont été coupés antérieurement.

Les plantes fibreuses conditionnées en balles par la mise en oeuvre du procédé selon l'invention peuvent maintenant être teillées et peignées plus facilement et plus rapidement que les plantes conditionnées en balles de manière conventionnelle.

En effet, les opérations de teillage et de peignage peuvent être effectuées indépendamment des opérations de traitement des têtes et des pieds, dans d'autres sites et à d'autres moments.

De préférence, le procédé de conditionnement selon l'invention comprend, après l'étape de ramassage et avant l'étape d'enroulement, les étapes consistant à broyer les tiges ramassées afin de casser les filaments de bois qu'elles renferment, à décortiquer les tiges broyées afin de les débarrasser des fragments de filaments de bois et des anas, et à disposer à plat les fibres ainsi teillées.

Après l'exécution de ces étapes, les tiges des plantes fibreuses mises en balles pourront être dirigées dans les sites de transformation en ayant subi un pré-teillage.

Les opérations de teillage et de peignage à effectuer ultérieurement dans les sites de transformation pourront donc être réalisées de manière plus facile, plus rapide et moins coûteuse qu'actuellement.

Lors de la mise en oeuvre du procédé de conditionnement selon l'invention, l'étape de broyage peut avantageusement consister à faire passer les tiges entre au moins un jeu de deux cylindres parallèles aptes à tourner en sens inverse et comportant des cannelures imbriquées au moins en partie les unes dans les autres, les tiges étant parallèles aux cylindres lors de leur passage entre ceux-ci.

Quant à l'étape de décorticage, elle peut avantageusement être réalisée en deux phases successives au cours de chacune desquelles les tiges sont décortiquées sur une moitié de leur périphérie.

Le procédé selon l'invention peut par ailleurs comprendre une étape supplémentaire consistant à récupérer les fragments de filaments de bois et les anas afin qu'ils puissent être recyclés et utilisés dans l'industrie.

La présente invention concerne également une machine selon la revendication 6 pour conditionner en balles des plantes fibreuses, notamment du lin, du chanvre ou du sisal, disposées en andain sur le sol et rouies au moins partiellement.

La machine selon l'invention assure ainsi un pré-teillage des tiges des plantes fibreuses avant la mise en balles, et permet par conséquent de simplifier et d'accélérer les procédures de traitement dans les sites de transformation.

Avantageusement, les moyens de broyage peuvent comprendre au moins un groupe de deux cylindres disposés parallèlement l'un au-dessus de l'autre, aptes à tourner en sens inverse et comportant des cannelures imbriquées au moins en partie les unes dans les autres, les tiges étant broyées en passant entre les cylindres, parallèlement à ceux-ci.

Quant aux moyens de décorticage, ils peuvent comprendre deux ensembles décortiqueurs assurant chacun un décorticage sur une moitié de la périphérie des tiges.

De préférence, chaque ensemble décortiqueur comprend deux tambours s'étendant parallèlement à la trajectoire des tiges à décortiquer et définissant chacun un couloir de largeur constante avec un élément séparateur situé entre eux, les tambours comportant chacun des lamelles longitudinales sur leur surface latérale et étant aptes à tourner en sens inverse pour que leurs lamelles se déplacent le long de sensiblement la moitié de la longueur des tiges tout en appliquant ces dernières contre les deux flancs longitudinaux de l'élément séparateur.

Afin d'assurer un décorticage uniforme sur toutes les tiges des plantes, il est souhaitable que les lamelles longitudinales des tambours soient disposées radialement et à égale distance les unes des autres, et aient une hauteur pratiquement égale à la largeur des couloirs.

Par ailleurs, pour préserver au maximum les fibres des tiges, les lamelles sont de préférence réalisées en un matériau souple, notamment en cuir ou en bois.

La machine selon l'invention peut en outre comprendre des moyens pour récupérer les fragments de filaments de bois et les anas en vue de leur recyclage dans l'industrie.

D'une manière particulièrement avantageuse, la machine selon l'invention peut comporter une cabine de conduite située à l'avant et en partie centrale.

Le conducteur peut ainsi parfaitement voir l'espace situé devant lui et à proximité de chacun des côtés longitudinaux de la machine.

La disposition centrale de la cabine peut avantageusement être exploitée pour équiper la machine de deux ensembles de conditionnement disposés de part et d'autre de son axe longitudinal, chaque ensemble comprenant des moyens de ramassage, des moyens de broyage, des moyens de décorticage, des moyens de mise à plat et des moyens d'enroulement.

Cette machine peut ainsi avoir un excellent rendement horaire et permettre par conséquent une diminution appréciable du prix de revient du conditionnement en balles.

Un mode d'exécution de la présente invention sera décrit ci-après à titre d'exemple nullement limitatif en référence aux dessins annexés dans lesquels :
la figure 1 est une vue schématique de côté d'une machine de conditionnement conforme à l'invention, le châssis de cette machine n'étant pas représenté pour des raisons de simplification;
la figure 2 est une vue schématique de dessus de la machine visible sur la figure 1;
la figure 3 est une vue de côté schématique et à échelle agrandie des moyens de broyage de la machine ; et
la figure 4 est une vue en coupe schématique et à échelle agrandie selon la ligne IV-IV de la figure 1.

La machine représentée schématiquement sur les dessins a été mise au point pour mettre en balles des plantes de lin textile disposées en andain sur le sol.

Il va de soi cependant qu'elle pourrait être utilisée pour mettre en balles d'autres plantes fibreuses, par exemple du chanvre ou du sisal.

La machine visible sur les dessins repose sur des roues avant 1 et des roues arrière 2 et se déplace dans le sens de la flèche F lorsqu'elle est utilisée pour ramasser et mettre en balles les plantes fibreuses.

Il convient de noter ici que les têtes et les pieds des plantes ont été coupés avant la mise en andain afin de faciliter et d'accélérer le rouissage de celles-ci.

La machine selon l'invention a été précisément adaptée pour conditionner en balles les tiges restant après le sectionnement des têtes et des pieds des plantes de lin textile.

Elle comprend tout d'abord des moyens de ramassage 3 situés à sa partie antérieure, ces moyens étant disposés symétriquement par rapport à son axe longitudinal et ayant une structure conventionnelle qu'il est inutile de décrire ici.

On indiquera simplement que les moyens 3 sont conçus pour ramasser simultanément deux andains et les déplacer dans le sens de la flèche A afin de les diriger vers l'intérieur de la machine.

La machine comprend également des moyens de broyage 4 situés immédiatement-après les moyens de ramassage 3 et conçus pour casser les filaments de bois contenus dans les tiges de plantes constituant les andains.

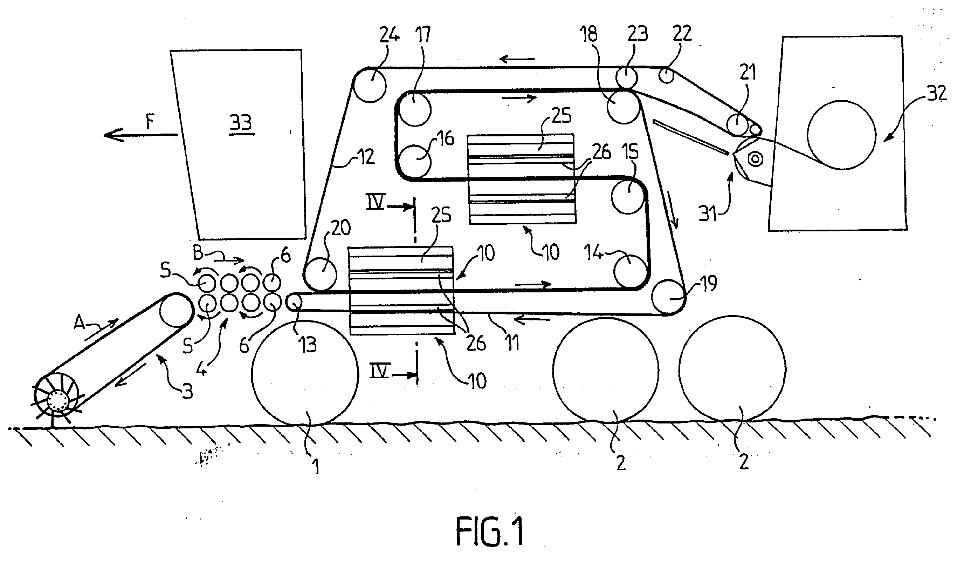

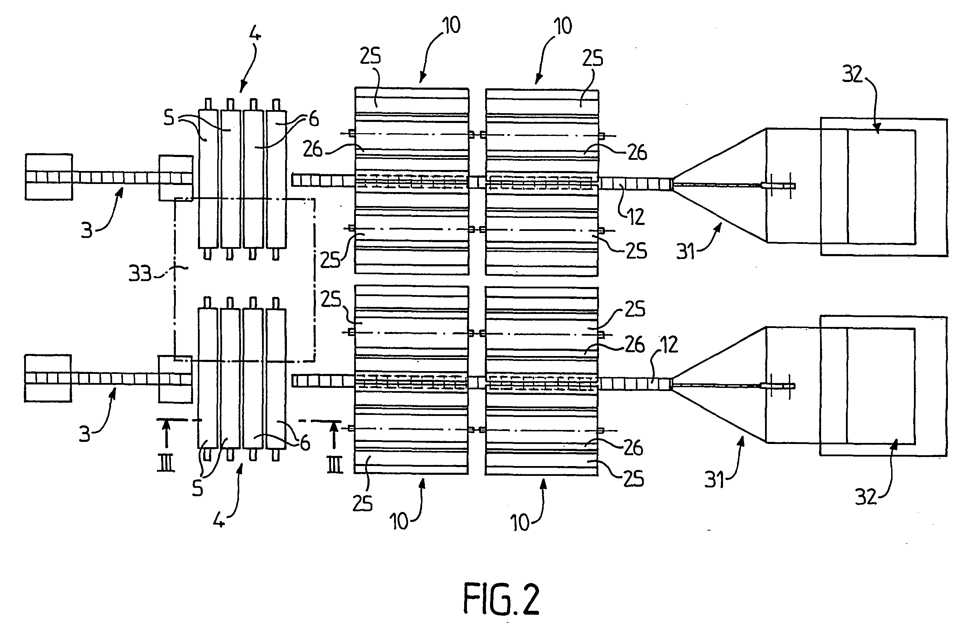

Dans le mode de réalisation représenté sur les figures 1 et 2, les moyens de broyage 4 sont répartis en deux ensembles identiques disposés symétriquement par rapport à l'axe longitudinal de la machine et destinés chacun à broyer les filaments de bois des tiges constituant le même andain.

Chaque ensemble de broyage comprend quatre groupes de deux cylindres 5, 6 disposés parallèlement l'un au-dessus de l'autre et destinés à tourner en sens inverse sous la commande d'organes d'entraînement conventionnels non représentés.

Les quatre groupes de deux cylindres de chaque ensemble sont disposés à la même hauteur les uns à la suite des autres, tandis que les sens de rotation de leurs cylindres respectifs sont choisis pour que ceux-ci entraînent dans le sens de la flèche B les tiges des plantes parvenant à l'extrémité postérieure des moyens de ramassage 3 correspondants.

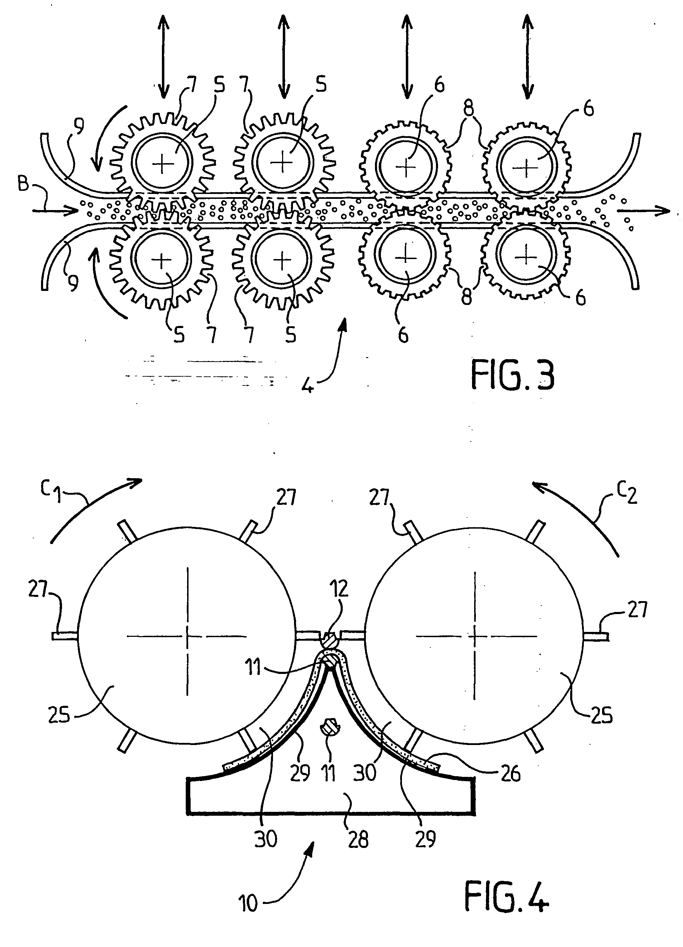

En se référent à la figure 3, on remarquera que les deux premiers groupes de cylindres comportent chacun deux cylindres 5 pourvus de cannelures longitudinales 7 tandis que les deux derniers groupes comportent chacun deux cylindres 6 pourvus de cannelures longitudinales 8, les cylindres 6 ayant un diamètre légèrement inférieur à celui des cylindres 5 et des cannelures 8 moins profondes que les cannelures 7.

On remarquera également que les cannelures des cylindres associés sont imbriquées les unes dans les autres, leur imbrication étant prévue pour briser les filaments de bois contenus dans les tiges pendant le déplacement de celles-ci dans le sens de la flèche B.

Bien entendu, les cylindres des deux ensembles de broyage pourraient être identiques sans que l'on sorte pour autant du cadre de la présente invention.

Dans le mode de réalisation envisagé ici, les cylindres supérieurs 5, 6 sont réglables en hauteur sous la commande d'organes conventionnels non représentés afin d'ajuster le degré d'imbrication de leurs cannelures avec celles des cylindres inférieurs 5, 6 et de broyer dans des conditions optimales les filaments de bois contenus dans les tiges.

Par ailleurs, les tiges circulant dans les ensembles de broyage sont guidées par deux parois 9 situées l'une en face de l'autre de façon à ménager un couloir de circulation et à éviter ainsi une dispersion des tiges dans l'espace environnant.

A leur sortie de chacun des ensembles de broyage, les tiges sont entraînées vers un premier ensemble décortiqueur 10 par l'intermédiaire de deux courroies 11, 12 plus particulièrement visibles sur la figure 1.

Cette figure montre que la courroie 11 passe successivement sur :
- une poulie 13 située au voisinage du cylindre inférieur du dernier groupe de cylindres de l'ensemble de broyage correspondant ;
- une poulie 14 située à l'arrière de la machine, à une hauteur supérieure à celle de la poulie 13 pour que le brin de courroie s'étendant entre ces deux poulies soit horizontal;
- une poulie 15 située au-dessus de la poulie 14;
- une poulie 16 située à l'avant de la machine, à une hauteur supérieure à celle de la poulie 15 pour que le brin de courroie s'étendant entre ces deux poulies soit horizontal ;
- une poulie 17 située au-dessus de la poulie 16 ;
- une poulie 18 située à l'arrière de la machine, pratiquement au-dessus des poulies 15 et 16; et
- une poulie 19 située en arrière de la poulie 14, à une hauteur plus faible que celle de cette dernière.

La figure 1 montre également que la courroie 12 passe successivement sur :
- une poulie 20 située à l'avant de la machine, à la même hauteur que la poulie 14 et légèrement en arrière de la poulie 13;
- les poulies 14 à 18 ;
- une poulie 21 située en arrière de la poulie 18 et à une hauteur plus faible ;
- une poulie 22 située entre les poulies 18 et 21, mais à une hauteur plus grande ;
- une poulie 23 située au-dessus de la poulie 18 ; et
- une poulie 24 située en avant de la poulie 17, à une hauteur plus grande que celle de cette dernière.

Grâce à ce montage particulier, les courroies 11 et 12 sont en contact l'une avec l'autre sur la partie de leur longueur allant de la poulie 20 à la poulie 18 en passant par les poulies 14 à 17.

On précisera ici que les courroies 11 et 12 sont entraînées dans le sens des flèches non référencées sur la figure 1 par l'intermédiaire d'organes moteurs.conventionnels non représentés.

Lorsque les tiges sortent d'un ensemble de broyage, la courroie 11 correspondante les entraîne vers le premier ensemble décortiqueur 10, d'abord seule sur la distance allant de la poulie 13 à la poulie 20, puis en coopération avec la courroie 12 sur la distance allant de cette poulie à l'ensemble décortiqueur 10.

Pendant leur déplacement de l'un des ensembles de broyage à l'ensemble de décorticage associé, les tiges sont entraînées par les courroies 11 et 12 en étant soutenues uniquement au niveau de leur partie médiane, et prennent par conséquent une configuration en U inversé.

En se référant maintenant à la figure 4 qui représente la structure d'un ensemble décortiqueur 10, on constate que celui-ci comprend deux tambours 25 s'étendant parallèlement à la trajectoire des tiges 26 à décortiquer et pourvus chacun de lamelles longitudinales 27 disposées radialement et à égale distance les unes des autres, ainsi qu'un élément séparateur 28 situé entre les deux tambours et comportant deux flancs longitudinaux 29 délimitant avec chacun de ces tambours un couloir 30 de largeur constante.

On constate également que les brins des courroies 11 et 12 qui entraînent les tiges 26 sont situés juste au-dessus de la partie la plus haute de la face supérieure de l'élément séparateur 28.

Les deux tambours 25 sont montés de façon à tourner en sens inverse sous la commande d'organes moteurs non représentés, dans les directions représentées par les flèches C₁, C₂ sur la figure 4, afin que leurs lamelles longitudinales 27 se déplacent le long de sensiblement la moitié de la longueur des tiges 26 tout en appliquant ces dernières contre les deux flancs 29 de l'élément séparateur 28.

Ainsi, les lamelles 27 décortiquent les tiges 26 sur approximativement une moitié de leur périphérie afin de les débarrasser d'une première partie des fragments de filaments de bois et des anas.

A leur sortie du premier ensemble décortiqueur, les tiges des plantes sont pincées, au niveau de leur partie médiane, par les courroies 11, 12 qui les entraînent jusqu'à un second ensemble décortiqueur 10 identique au premier.

Le second ensemble décortiqueur 10 est situé entre les poulies 15 et 16 et traversé par les courroies 11 et 12, exactement comme le premier ensemble décortiqueur.

Cependant, comme les courroies retournent les tiges de 180° lorsqu'elles circulent de la poulie 14 à la poulie 15, les lamelles longitudinales des deux tambours du second ensemble décortiqueur se déplacent elles aussi le long de sensiblement la moitié de la longueur des tiges 26, mais sur la seconde moitié de la périphérie de celles-ci.

Ainsi, le second ensemble décortiqueur débarrasse les tiges des fragments de filaments de bois et des anas qui n'ont pas été enlevés par le premier ensemble décortiqueur.

La machine comprend par ailleurs des moyens conventionnels 31 prévus immédiatement après la poulie 21 et destinés à disposer à plat les tiges teillées par les deux ensembles décortiqueurs 10, ainsi que des moyens conventionnels 32 disposés après les moyens 31 et destinés à enrouler les tiges sous forme de balles.

On notera ici que la machine comporte une cabine de conduite 33 située à l'avant et en position centrale afin d'offrir au conducteur une vue parfaite sur les andains à ramasser ainsi que sur les côtés longitudinaux de la machine.

Pour être complet, on précisera que la machine qui vient d'être décrite peut avantageusement comporter des moyens non représentés pour récupérer les fragments de filament de bois et les anas afin que ces déchets puissent être recyclés industriellement.

## Revendications

1. Procédé pour conditionner en balles des plantes fibreuses, notamment du lin, du chanvre ou du sisal, comprenant les étapes consistant successivement à sectionner le pied des plantes, à disposer les plantes sans pied en andain sur le sol, à les laisser rouir au moins partiellement, à les ramasser et à les enrouler, **caractérisé en ce qu'**il consiste à couper la tête des plantes avant leur mise en andain.

2. Procédé selon la revendication 1, **caractérisé en ce qu'**il comprend, après l'étape de ramassage et avant l'étape d'enroulement, les étapes consistant à broyer les tiges des plantes sans tête et sans pied afin de casser les filaments de bois qu'elles renferment, à décortiquer les tiges broyées afin de les débarrasser des fragments de filaments de bois et des anas, et à disposer à plat les fibres ainsi teillées.

3. Procédé selon la revendication 2, **caractérisé en ce que** l'étape de broyage consiste à faire passer les tiges des plantes sans tête et sans pied entre au moins un jeu de deux cylindres parallèles apte à tourner en sens inverse et comportant des cannelures imbriquées au moins en partie les unes, dans les autres, les tiges étant parallèles aux cylindres lors de leur passage entre ceux-ci.

4. Procédé selon la revendication 2 ou 3, **caractérisé en ce que** l'étape de décorticage est réalisée en deux phases successives au cours de chacune desquelles les tiges des plantes sans tête et sans pied sont décortiquées sur une moitié de leur périphérie.

5. Procédé selon l'une quelconque des revendications 2 à 4, **caractérisé en ce qu'**il comprend une étape consistant à récupérer les fragments de filaments de bois et les anas.

6. Machine pour conditionner en balles des plantes fibreuses, notamment du lin, du chanvre ou du sisal, disposées en andain sur le sol et rouies au moins partiellement, comprenant des moyens (3) pour ramasser les plantes, des moyens (4) pour broyer les tiges sans pied afin de casser les filaments de bois qu'elles renferment, des moyens (10) pour décortiquer les tiges broyées afin de les débarrasser des fragments de filaments de bois et des anas, des moyens (31) pour disposer à plat les fibres ainsi teillées, et des moyens (32) pour enrouler ces dernières sous forme de balles, **caractérisée en ce que** les moyens de broyage (4) comprennent au moins un groupe de deux cylindres (5 ; 6) disposés parallèlement l'un au-dessus de l'autre et aptes à tourner en sens inverse, les cylindres comportant des cannelures (7 ; 8) imbriquées au moins en partie les unes dans les autres et étant disposés pour que les tiges à broyer passent entre eux en leur étant parallèles.

7. Machine selon la revendication 6, **caractérisée en ce que** les moyens de décorticage (10) comprennent deux ensembles décortiqueurs assurant un décorticage sur une moitié de la périphérie des tiges sans tête et sans pied.

8. Machine selon la revendication 7, **caractérisée en ce que** chaque ensemble décortiqueur (10) comprend deux tambours (25) s'étendant parallèlement à la trajectoire des tiges (26) à décortiquer et définissant chacun un couloir (30) de largeur constante avec un élément séparateur (28) situé entre eux, les tambours comportant chacun des lamelles longitudinales (27) sur leur surface latérale et étant aptes à tourner en sens inverse pour que leurs lamelles se déplacent le long de sensiblement la moitié de la longueur des tiges tout en appliquant ces dernières contre les deux flancs longitudinaux (29) de l'élément séparateur.

9. Machine selon la revendication 8, **caractérisée en ce que** les lamelles longitudinales (27) des tambours (25) sont disposées radialement et à égale distance les unes des autres, et ont une hauteur pratiquement égale à la largeur des couloirs (30).

10. Machine selon la revendication 8 ou 9, **caractérisée en ce que** les lamelles (27) sont réalisées en un matériau souple, notamment en cuir ou en bois.

11. Machine selon l'une quelconque des revendications 6 à 10, **caractérisée en ce qu'**elle comprend en outre des moyens pour récupérer les fragments de filaments de bois et les anas.

12. Machine selon l'une quelconque des revendications 6 à 11, **caractérisée en ce qu'**elle comporte une cabine de conduite (33) située à l'avant et en partie centrale.

13. Machine selon la revendication 12, **caractérisée en ce qu'**elle comprend deux ensembles de conditionnement disposés de part et d'autre de son axe longitudinal, chaque ensemble comprenant des moyens de ramassage (3), des moyens de broyage (4), des moyens de décorticage (10), des moyens de mise à plat (31) et des moyens d'enroulement (32).

## Claims

1. A method of packing fibrous plants into bales, especially common flax, hemp plant or sisal, comprising the steps of successively cutting the feet of the plants, windrowing the footless plants on the soil, allowing them to ret at least partially, collecting and rolling them, **characterized in that** it comprises cutting the heads of the plants before windrowing.

2. The method according to claim 1, **characterized in that** it comprises, after the collecting step and prior to the rolling step, the steps of crushing the stalks of the headless and footless plants so as to break the wood filaments contained therein, barking the crushed stalks so as to free them from the pieces of wood filaments and the particles, and laying flat the thus stripped fibers.

3. The method according to claim 2, **characterized in that** the crushing step comprises allowing the stalks of the headless and footless plants to pass between at least a set of two parallel cylinders operable to counter-rotate and having splines that are intermeshed at least partially, the stalks being parallel to the cylinders when passing therebetween.

4. The method according to claim 2 or 3, **characterized in that** the barking step is performed in two successive phases, wherein during each phase the stalks of the headless and footless plants are barked on half of their periphery.

5. The method according to any of claims 2 to 4, **characterized in that** it comprises a step of recovering the pieces of wood filaments and the particles.

6. A machine tor packing fibrous plants into bales, especially common flax, hemp plant or sisal, windrowed on the soil and retted at least partially, comprising means (3) for collecting the plants, means (4) for crushing the footless stalks so as to break the wood filaments contained therein, means (10) for barking the crushed stalks so as to free them from the pieces of wood filaments and the particles, means (31) for laying flat the thus stripped fibers, and means (32) for rolling said stripped fibers into a bale, **characterized in that** the crushing means (4) comprises at least one group of two cylinders (5; 6) disposed in parallel one above the other and operable to counter-rotate, said cylinders having splines (7; 8) that are intermeshed at least partially and being arranged so that the stalks to be crushed pass between them while being parallel to them.

7. The machine according to claim 6, **characterized in that** the barking means (10) comprises two barking units performing barking on half of the periphery of the headless and footless stalks.

8. The machine according to claim 7, **characterized in that** each barking unit (10) comprises two drums (25) extending parallel to the path of the stalks (26) to be barked and defining each a passage (30) having a constant width with a separating member (28) located between them, the drums having each longitudinal slats (27) on their lateral surface and being operable to counter-rotate so that their slats move substantially along half of the length of the stalks while pressing said stalks against the two longitudinal sides (29) of the separating member.

9. The machine according to claim 8, **characterized in that** the longitudinal slats (27) of the drums (25) are disposed radially at an equal distance from one another and have a height substantially equal to the width of the passages (30).

10. The machine according to claim 8 or 9, **characterized in that** the slats (27) are made of a flexible material, especially leather or wood.

11. The machine according to any of claims 6 to 10, **characterized in that** it further comprises means for recovering the pieces of wood filaments and the particles.

12. The machine according to any of claims 6 to 11, **characterized in that** it comprises a driver's cab (33) located at the front and in a central part thereof.

13. The machine according to claim 12, **characterized in that** it comprises two packing units disposed on either side of its longitudinal axis, each unit comprising collecting means (3), crushing means (4), barking means (10), flat laying means (31) and rolling means (32).

## Patentansprüche

1. Verfahren zum Abpacken von Faserpflanzen, im Besonderen Flachs, Hanf oder Sisal, in Ballen, umfassend die Schritte, die aufeinanderfolgend daraus bestehen, den unteren Teil der Pflanzen abzutrennen, die Pflanzen ohne unteren Teil schwadförmig auf dem Boden anzuordnen, sie wenigstens teilweise rotten zu lassen, sie aufzusammeln und sie zusammenzuwickeln, **dadurch gekennzeichnet, dass** es das Abschneiden des oberen Teils der Pflanzen vor ihrem schwadförmigen Anordnen umfasst.

2. Verfahren nach Anspruch 1, **dadurch gekennzeichnet, dass** es nach dem Schritt des Aufsammelns und vor dem Schritt des Zusammenwickelns die Schritte bestehend aus Brechen der Stängel der Pflanzen ohne oberen Teil und ohne unteren Teil, um die Holzfasern, die sie einschließen, aufzubrechen, Schwingen der gebrochenen Stängel, um sie von Holzfaserteilen und Schäben zu befreien, und flaches Anordnen der so gehechelten Fasern umfasst.

3. Verfahren nach Anspruch 2, **dadurch gekennzeichnet, dass** der Schritt des Brechens daraus besteht, die Stängel der Pflanzen ohne oberen Teil und ohne unteren Teil zwischen wenigstens einem Satz aus zwei parallelen Walzen, die sich in umgekehrter Richtung drehen können und wenigstens teilweise ineinandergeschachtelte Kaliber enthalten, hindurchlaufen zu lassen, wobei sich die Stängel während ihres Durchlaufs zwischen den Walzen parallel zu den Walzen befinden.

4. Verfahren nach Anspruch 2 oder 3, **dadurch gekennzeichnet, dass** der Schritt des Schwingens in zwei aufeinanderfolgenden Phasen durchgeführt wird, wobei während jeder der Phasen die Stängel der Pflanzen ohne oberen Teil und ohne unteren Teil über eine Hälfte ihres Umfangs geschwungen werden.

5. Verfahren nach einem der Ansprüche 2 bis 4, **dadurch gekennzeichnet, dass** es einen Schritt bestehend aus dem Wiedergewinnen der Holzfaserteile und der Schäben umfasst.

6. Vorrichtung zum Abpacken von schwadförmig auf dem Boden angeordneten und wenigstens teilweise gerotteten Faserpflanzen, im Besonderen Flachs, Hanf oder Sisal, in Ballen, umfassend Einrichtungen (3) zum Aufsammeln der Pflanzen, Einrichtungen (4) zum Brechen der Stängel ohne unteren Teil, um die Holzfasern, die sie einschließen, aufzubrechen, Einrichtungen (10) zum Schwingen der gebrochenen Stängel, um sie von Holzfaserteilen und Schäben zu befreien, Einrichtungen (31) zum flachen Anordnen der so gehechelten Fasern und Einrichtungen (32) zum Zusammenwickeln der Letzteren in Form von Ballen, **dadurch gekennzeichnet, dass** die Brecheinrichtungen (4) wenigstens eine Gruppe von zwei Walzen (5; 6), die parallel übereinander angeordnet sind und sich in umgekehrter Richtung drehen können, umfassen, wobei die Walzen Kaliber (7; 8) enthalten, die wenigstens teilweise ineinandergeschachtelt sind und so angeordnet sind, dass die zu brechenden Stängel parallel zu ihnen zwischen ihnen durchlaufen.

7. Vorrichtung nach Anspruch 6, **dadurch gekennzeichnet, dass** die Schwingeinrichtungen (10) zwei Schwingeinheiten umfassen, die ein Schwingen über eine Hälfte des Umfangs der Stängel ohne oberen Teil und ohne unteren Teil sicherstellen.

8. Vorrichtung nach Anspruch 7, **dadurch gekennzeichnet, dass** jede Schwingeinheit (10) zwei Trommeln (25), die sich parallel zu der Bewegungsbahn der zu schwingenden Stängel (26) erstrecken und jeweils einen Durchgang (30) konstanter Breite bilden, umfasst, wobei ein Trennelement (28) zwischen ihnen angeordnet ist, die Trommeln jeweils Längslamellen (27) auf ihrer Seitenfläche umfassen und sich in umgekehrter Richtung drehen können, so dass sich ihre Lamellen im Wesentlichen entlang der Hälfte der Länge der Stängel verschieben und dabei die Stängel gegen die zwei Längsflanken (29) des Trennelementes drücken.

9. Vorrichtung nach Anspruch 8, **dadurch gekennzeichnet, dass** die Längslamellen (27) der Trommeln (25) radial und in gleichem Abstand zueinander angeordnet sind und eine Höhe, die praktisch der Breite der Durchgänge (30) entspricht, aufweisen.

10. Vorrichtung nach Anspruch 8 oder 9, **dadurch gekennzeichnet, dass** die Lamellen (27) aus einem elastischen Material, im Besonderen aus Leder oder aus Holz, ausgeführt sind.

11. Vorrichtung nach einem der Ansprüche 6 bis 10, **dadurch gekennzeichnet, dass** sie außerdem Einrichtungen zum Wiedergewinnen der Holzfaserteile und der Schäben umfasst.

12. Vorrichtung nach einem der Ansprüche 6 bis 11, **dadurch gekennzeichnet, dass** sie eine Führerkabine (33), die vorn und in dem mittleren Teil angeordnet ist, umfasst.

13. Vorrichtung nach Anspruch 12, **dadurch gekennzeichnet, dass** sie zwei Abpackeinheiten umfasst, die auf beiden Seiten ihrer Längsachse angeordnet sind, wobei jede Einheit Aufsammeleinrichtungen (3), Brecheinrichtungen (4), Schwingeinrichtungen (10), Flachanordnungseinrichtungen (31) und Zusammenwickeleinrichtungen (32) umfasst.
